# EUROPEAN PATENT APPLICATION

(11) **EP 2 104 038 A2**
(43) Date of publication of application: **23.09.2009**
(21) Application number: 09003086.7
(22) Date of filing: 04.03.2009
(51) Int. Cl.: G06F 9/445

(54) **Computer system with dual boot-program area and method of booting the same**

(30) Priority: 21.03.2008 TW 97110054
(71) Applicant: ASUSTeK Computer Inc., 11259 Taipei (TW)
(72) Inventor: Chou, Yen-Ting, Taipei 12259 (TW)
(74) Representative: Winkler, Andreas Fritz Ernst

(57) **Abstract**

A computer system with a dual boot-program area, comprises: a processing unit (46); a BIOS ROM (58) having a primary boot-program area (40; 60), a secondary boot-program area (42; 62), and a BIOS main-code area (44; 64), wherein a first code is both stored at a first address of the primary boot-program area (40; 60) and a second address of the secondary boot-program area(42; 62); and a BIOS-switching circuit (52), connected to the BIOS ROM (58), further comprising a detecting circuit (54) and an address-switching circuit (56). The detecting circuit (54) can control the address-switching circuit (56) to be operated in an enable mode or a disable mode. A command, issued from the processing unit (46) and for retrieving the first code, is sent to the first address of the primary boot-program area (40; 60) after a power button of the computer system is pressed if the address-switching circuit (56) is operated in the disable mode; or, the command is sent to the second address of the secondary boot-program area (42; 62) if the address-switching circuit (56) is operated in the enable mode.

## Description

### FIELD OF THE INVENTION

The present invention relates to a computer system and its boot procedure, and more particularly to a computer system having a dual boot-program area structured in a single BIOS ROM and a boot procedure for the computer system.

### BACKGROUND OF THE INVENTION

In most computer system, the CPU (Central Processing Unit) first executes codes of a BIOS (Basic Input/Output System), which is stored in a ROM (Read-Only Memory) after a power button of a computer system is pressed. The main functions of the BIOS are to initial elements of the computer system, providing basic functions of an OS (Operation System), and to execute a POST (Power On Self-Test) and a bootstrap program.

The POST (Power On Self-Test) is used for testing the basic elements in the computer system and making sure all the basic elements can work properly. After the POST (Power On Self-Test), the BIOS then execute the bootstrap program. The bootstrap program is used for loading monitor programs of the OS (Operation System) from a disk to a main memory, and the boot program loaded in the main Memory is for executing the OS (Operation System).

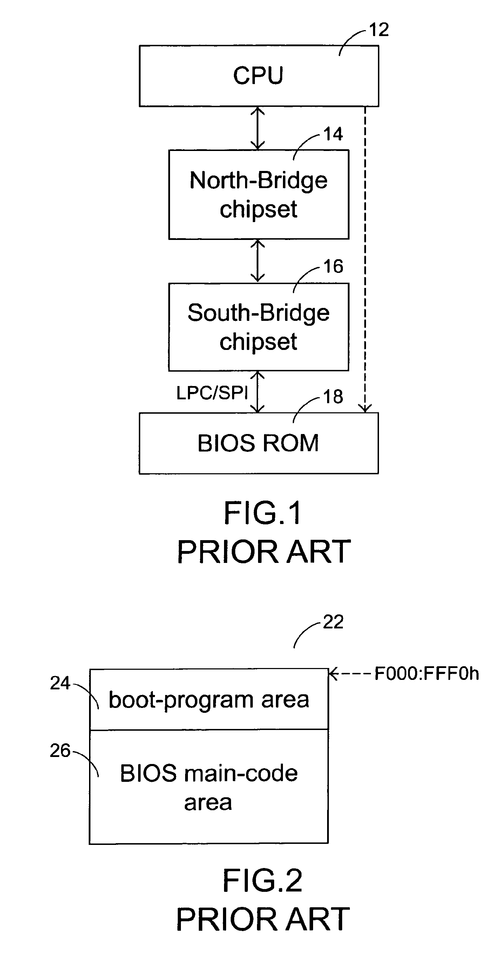

FIG. 1 is a block diagram depicting a conventional executing BIOS procedure of a computer system. The computer system comprises: a CPU 12, a north-bridge chipset 14, a south-bridge chipset 16, and a BIOS ROM 18. The BIOS (Basic Input/Output System), for maintaining the basic functions of the CPU 12, is stored in the BIOS ROM 18.

First, a motherboard (not depicted in FIG.1) of the computer system is powered after an external power source is applied to the computer system. When the power button of the computer system is pressed, the address CS:IP of the command register in the CPU 12 is initially set to F000:FFF0h (Intel x86 system series). The address CS:IP= F000:FFF0h in the BIOS ROM 18 is used for storing the first code. The first code is always retrieved by the CPU 12 first when the power button is pressed. In other words, when the power button of the computer system is pressed, the CPU 12 always first issues a command (dot line in FIG.1) to a fixed address (CS:IP= F000:FFF0h) in the BIOS ROM 18 for retrieving the first code.

When the command, issued by the CPU 12 for retrieving the first code, is sent to the BIOS ROM 18 sequentially via the north-bridge chipset 14 and the south-bridge chipset 16, the first code stored at the fixed address (CS:IP= F000:FFF0h) in the BIOS ROM 18 is accessed by the CPU 12, and the first code is then sent to and executed by the CPU 12.

FIG. 2 is a scheme depicting the structure of a conventional BIOS ROM. The BIOS ROM 22 is divided to two areas, a boot-program area 24 and a BIOS main-code area 26. The first code is stored in the boot-program area 24 (CS:IP= F000:FFF0h). When the power button of the computer system is pressed, the first step adopted by the CPU is to retrieve the first code in the boot-program area 24 (CS:IP= F000:FFF0h). In this phase, the BIOS mainly functions to initialize the basic hardware (e.g. CPU, memory, or chipsets) of the computer system.

After the initialization of the basic hardware in the computer system is complete, the CPU then retrieves the codes in the BIOS main-code area 26 for executing the POST (Power On Self-Test). In this phase, the BIOS mainly functions to initialize the complete computer system (e.g. turning on the monitor or detecting devices). Generally, even the codes in the BIOS main-code area 26 are damaged, the computer system can be minimum booted if the codes stored in the boot-program area 24 can be successfully accessed and executed by the CPU.

If the codes in the BIOS main-code area 26 are damaged, the damaged coded can be repaired or upgraded through a CD-ROM disc or other methods. However, once the codes in the boot-program area 24 are damaged, it is impossible to boot the computer system due to the CPU is always fixed to retrieve the first code (CS:IP= F000:FFF0h) in the boot-program area 24 after the power button is pressed. In other words, the computer system cannot boot successfully unless manually re-write the all data in the BIOS ROM 22 if the codes in the boot-program area 24 are damaged.

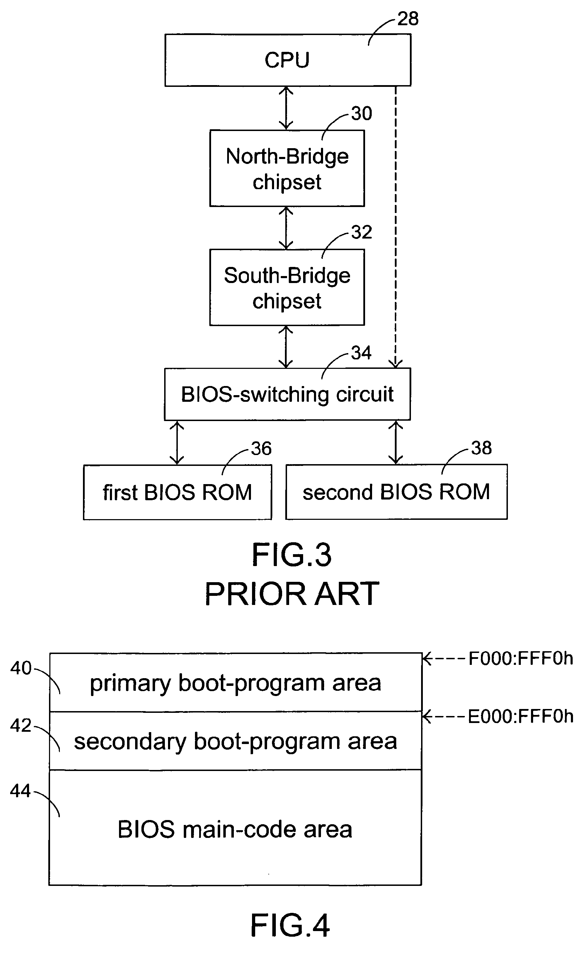

To fix the problem of computer system cannot boot successfully resulted from the damaged codes in the boot-program area 24, a computer system with a dual BIOS program is disclosed in a Taiwan patent (No 591377). FIG. 3 is a block diagram depicting a computer system having a structure of a dual BIOS. The computer system with a dual BIOS comprises: a CPU 28, a north-bridge chipset 30, a south-bridge chipset 32, a BIOS-switching circuit 34, a first BIOS ROM 36, and a second BIOS ROM 38. The first BIOS ROM 36 is used for storing a primary BIOS and the second BIOS ROM 38 is used for storing a secondary BIOS.

If the computer system cannot be booted successfully results from the primary BIOS stored in the first BIOS ROM 36 is damaged, the secondary BIOS stored in the second BIOS ROM 38 can replace the primary BIOS, and to be loaded in and executed by the CPU 28 through the operation of the BIOS-switching circuit 34. Then, the computer system can be booted successfully after the execution of the secondary BIOS is complete.

The success or failure of the execution of the primary BIOS is determined by the BIOS-switching circuit 34. The BIOS-switching circuit 34 can be implemented by a timer. The execution of the primary BIOS is determined to fail by the BIOS-switching circuit 34 if the primary BIOS can not be executed completely within a specific time, say 5 seconds, and the BIOS-switching circuit 34 will switch the BIOS from the primary BIOS stored in the first BIOS ROM 36 to the secondary BIOS stored in the second BIOS ROM 38. The selected BIOS (secondary BIOS) is then used for the re-boot of the computer system.

Moreover, the BIOS-switching circuit 34 can be implemented by a LPC/SPI clock detecting circuit. When the power button of the computer system is pressed, the south-bridge chipset 32 will keep sending clock signals to the first BIOS ROM 36. The primary BIOS is determined to fail by the BIOS-switching circuit 34 if the south-bridge chipset 32 stops sending the clock signals to the first BIOS ROM 36. The BIOS switching circuit 34 then switches the BIOS from the primary BIOS stored in the first BIOS ROM 36 to the secondary BIOS stored in the second BIOS ROM 38, and the selected BIOS program (secondary BIOS) is used for the re-boot of the computer system.

Moreover, the BIOS-switching circuit 34 can be implemented by a switch if a user prefers to manually select the secondary BIOS stored in the second BIOS ROM 38 for booting the computer system. In other words, the BIOS-switching circuit 34 can switch the BIOS from the primary BIOS stored in the first BIOS ROM 36 to the secondary BIOS stored in the second BIOS ROM 38 if the user manually turns on the switch. The selected BIOS (secondary BIOS) is then retrieved and used for the boot of the computer system after the switch is turned on and the power button of the computer system is pressed.

However, the above-mentioned computer systems with a dual BIOS adopts two independent BIOS ROMs, and each BIOS ROM also has its own boot-program area and BIOS main-code area, it follows the increasing cost of the computer system and the increasing area of the motherboard.

### SUMMARY OF THE INVENTION

Therefore, the present invention relates to a computer system with a structure of a dual boot-program area in one BIOS ROM.

The present invention discloses a computer system with a dual boot-program area, comprising: a processing unit; a BIOS ROM having a primary boot-program area, a secondary boot-program area, and a BIOS main-code area, wherein a first code is both stored at a first address of the primary boot-program area and a second address of the secondary boot-program area; and a BIOS-switching circuit, connected to the BIOS ROM, further comprising a detecting circuit and an address-switching circuit, wherein detecting circuit can control the address-switching circuit to be operated between an enable mode or a disable mode; wherein a command, issued from the processing unit and for retrieving the first code, is sent to the first address of the primary boot-program area after a power button of the computer system is pressed if the address-switching circuit is operated in the disable mode; or, the command is sent to the second address of the secondary boot-program area if the address-switching circuit is operated in the enable mode.

Moreover, the present invention discloses a BIOS program executing method for a computer system with a dual boot-program area, wherein the computer system at least comprises a processing unit, a BIOS ROM, and a BIOS-switching circuit constituted by a detecting circuit and an address-switching circuit capable of operated in an enable mode and a disable mode, comprising steps of: powering on the BIOS-switching circuit through connecting the computer system to an external power source; sending a command of retrieving a first code from the processing unit to the BIOS-switching circuit after a power button of the computer system is pressed; and directly transferring the command from the address-switching circuit to the BIOS ROM if the address-switching circuit is operated in the disable mode; or, converting the address of the command first which is achieved by the address-switching circuit, and then sending the command to the BIOS ROM if the address-switching circuit is operated in the enable mode.

### BRIEF DESCRIPTION OF THE DRAWINGS

The above objects and advantages of the present invention will become more readily apparent to those ordinarily skilled in the art after reviewing the following detailed description and accompanying drawings, in which:

FIG 1 is a block diagram illustrating a computer system having a conventional structure of a BIOS program;

FIG. 2 is a scheme illustrating the structure of a conventional BIOS ROM;

FIG.3 is a block diagram illustrating a computer system having a structure of a dual BIOS program in prior art;

FIG. 4 is a scheme illustrating a structure of a BIOS ROM of the present invention;

FIG. 5 is a block diagram illustrating the computer system having a structure of a dual boot-program area of the present invention; and

Fig. 6 is a flowchart illustrating a booting procedure of the computer system with a dual boot-program area of the present invention.

### DETAILED DESCRIPTION OF PREFERRED EMBODIMENTS

FIG. 4 is a scheme depicting a structure of a BIOS ROM of the present invention. The BIOS ROM of the present invention is divided to three areas, a primary boot-program area 40, a secondary boot-program area 42, and a BIOS main-code area 44. The first code in the primary boot-program area 40 is stored at the address CS:IP=F000:FFF0h; the first code in the secondary boot-program area 42 is stored at the address CS:IP= E000:FFF0h.

First, a power button of the computer system of the present invention is pressed. If a failure of the boot of the computer system is resulted from the damage of the primary boot-program area 40 and therefore the CPU cannot successfully retrieve the first code (CS:IP= F000:FFF0h) in the primary boot-program area 40, the command, issued from the CPU and for retrieving the first code, is mapped from the primary boot-program area 40 (CS:IP= F000:FFF0h) to the secondary boot-program area 42 (CS:IP= E000:FFF0h) by a BIOS-switching circuit, and the retrieved first code (CS:IP= E000:FFF0h) is then used for re-booting the computer system. In other words, when the CPU tries to access a specific address in the primary boot-program area 40, the specific address will be mapped to a corresponding address in the secondary boot-program area 42 by the BIOS-switching circuit if the primary boot-program area 40 is damaged.

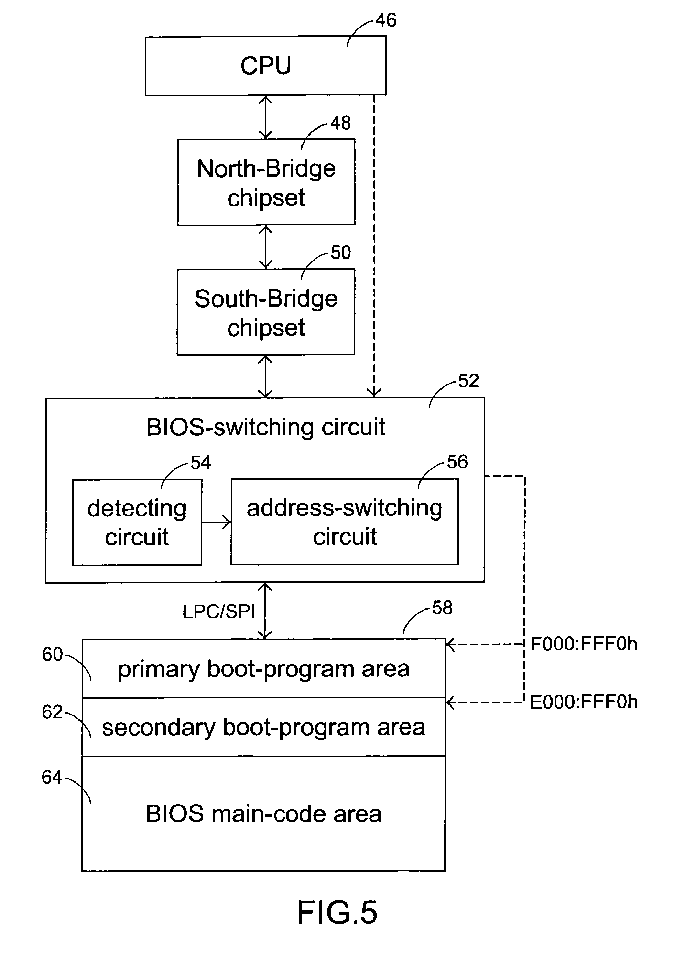

FIG. 5 is a block diagram depicting the computer system with a structure of a dual boot-program area of the present invention. The computer system comprises: a CPU 46, a north-bridge chipset 48, a south-bridge chipset 50, a BIOS-switching circuit 52, and a BIOS ROM 58. The BIOS switching-circuit 52 further comprises a detecting circuit 54 and an address-switching circuit 56 capable of operated between an enable mode and a disable mode. The BIOS ROM 58 is divided to three areas, a primary boot-program area 60, a secondary boot-program area 62, and a BIOS main-code area 64. The first code in the primary boot-program area 60 is stored at the address CS:IP= F000:FFF0h; the first code in the secondary boot-program area 62 is stored at the address CS:IP= E000:FFF0h.

When a power button of the computer system is pressed, the address CS:IP of the command register in the CPU 46 is initially set to F000:FFF0h (Intel x86 system series). The address CS:IP= F000:FFF0h in the BIOS ROM 58 is used for storing the first. In other words, when a power button of the computer system is pressed, the CPU 46 always first issues a command (dot line in FIG.5) to a fixed address (CS:IP= F000:FFF0h) in the BIOS ROM 58 for retrieving the first code. Before reaching to the primary boot-program area 60, the command is sequentially via the north-bridge chipset 48, the south-bridge chipset 50, and the BIOS-switching circuit 52.

In the initial state, the address-switching circuit 56 in the BIOS-switching circuit 52 is assumed to be operated in the disable mode. The command, issued by the CPU 46 and for retrieving the first code, is directly transferred to the primary boot-program area 60 by the address-switching circuit 56 operated in the disable mode. When the command is sent to the primary boot-program area 60, the first code, stored at the address CS:IP= F000:FFF0h in the primary boot-program area 60 is accessed and executed by the CPU 46. If the codes in the primary boot-program area 60 can be successfully retrieved and executed by the CPU 46, the CPU 46 then retrieves and executes the codes in the BIOS main-code area 64 for the POST (Power On Self-Test).

Alternatively, if the detecting-circuit 54 detects the failure of the boot of the computer system resulted from the codes in the primary boot-program area 60 cannot be successfully retrieved and executed by the CPU 46, the detecting circuit 54 then controls the address-switching circuit 56 to be operated in the enable mode.

When a user re-presses the power button due to the computer system cannot be booted successfully, the command, issued from the CPU 46 and for retrieving the first code, is re-sent to the BIOS-switching circuit 52 sequentially via the north-bridge chipset 48, the south-bridge chipset 50. Because the address-switching circuit 56 is operated in the enable mode now, the command, originally sent to the primary boot-program area 60 for retrieving the first code (CS:IP= F000:FFF0h), is mapped to the secondary boot-program area 62 for retrieving the first code (CS:IP= E000:FFF0h) by the address-switching circuit 56. The first code (CS:IP= E000:FFF0h) is then sent to the CPU 46 for executing. Also, if the codes in the secondary boot-program area 62 can be successfully retrieved and executed by the CPU 46, the CPU 46 then retrieves and executes the codes in the BIOS main-code area 64 for the POST (Power On Self-Test).

Through the function of the BIOS-switching circuit 52, even the computer system cannot be booted successfully resulted from the damage of the primary boot-program area 60 and therefore the codes in the primary boot-program area 60 cannot be retrieved by the CPU 46, the computer system still can be booted successfully through the codes in the secondary boot-program area 62. Additionally, the operation voltage of the BIOS-switching circuit 52 must be supplied by a standby voltage source (for example, Super I/O voltage source) due to the BIOS-switching circuit 52 must be in duty before the power button of the computer system is pressed. In other words, the BIOS-switching circuit 52 is in duty immediately after the motherboard of the computer system is powered by an external power source applied to the computer system, it guarantees the BIOS-switching circuit 52 can work properly prior than the power button of the computer system is pressed.

The success or failure of the execution of the codes in the primary boot-program area is determined by the detecting-circuit 54. As mentioned above, the detecting circuit 54 can be implemented by a timer. The execution of the codes in the primary boot-program area 60 is determined to fail by the detecting circuit 54 if the codes in the primary boot-program area 60 can not be executed completely within a specific time, say 5 seconds. If the detecting circuit 54 detects the failure of the boot of the computer system, the detecting circuit 54 then controls the address-switching circuit 56 to be operated in the enable mode. When the user re-presses the power button due to the computer system cannot be booted successfully, the command, originally sent to the primary boot-program area 60 for retrieving the first code (CS:IP= F000:FFF0h), is mapped to the secondary boot-program area 62 for retrieving the first code (CS:IP= E000:FFF0h) by the address-switching circuit 56, the retrieved first code (CS:IP= E000:FFF0h) is then sent to the CPU 46 for executing.

Moreover, the detecting circuit 54 can be implemented by a LPC/SPI clock detecting circuit. When the power button of the computer system is pressed, the south-bridge chipset 50 will keep sending clock signals to the BIOS ROM 58. The execution of the codes in the primary boot-program area 60 by the CPU 46 is determined to fail by the detecting circuit 54 if the south-bridge chipset 50 stops sending the clock signals to the BIOS ROM 58. The detecting circuit 54 then controls the address-switching circuit 56 to be operated in the enable mode. When the user re-presses the power button due to the computer system cannot be booted successfully, the command, originally sent to the primary boot-program area 60 for retrieving the first code (CS:IP= F000:FFF0h), is mapped to the secondary boot-program area 62 for retrieving the first code (CS:IP= E000:FFF0h) by the address-switching circuit 56, the accessed first code (CS:IP= E000:FFF0h) is then sent to the CPU 46 for executing.

Moreover, the BIOS-switching circuit 52 can be implemented by a switch if a user prefers to manually select the codes stored in the secondary boot-program area 62 for booting the computer system. In other words, the detecting circuit 54 can control the address-switching circuit 56 to be operated in the enable mode if the user manually turns on the switch. When the user presses the power button of the computer system, the command, originally sent to the primary boot-program area 60 for retrieving the first code (CS:IP= E000:FFF0h), is mapped to the secondary boot-program area 62 for retrieving the first code (CS:IP= E000:FFF0h) by the address-switching circuit 56, the accessed first code (CS:IP= E000:FFF0h) is then sent to the CPU 46 for executing.

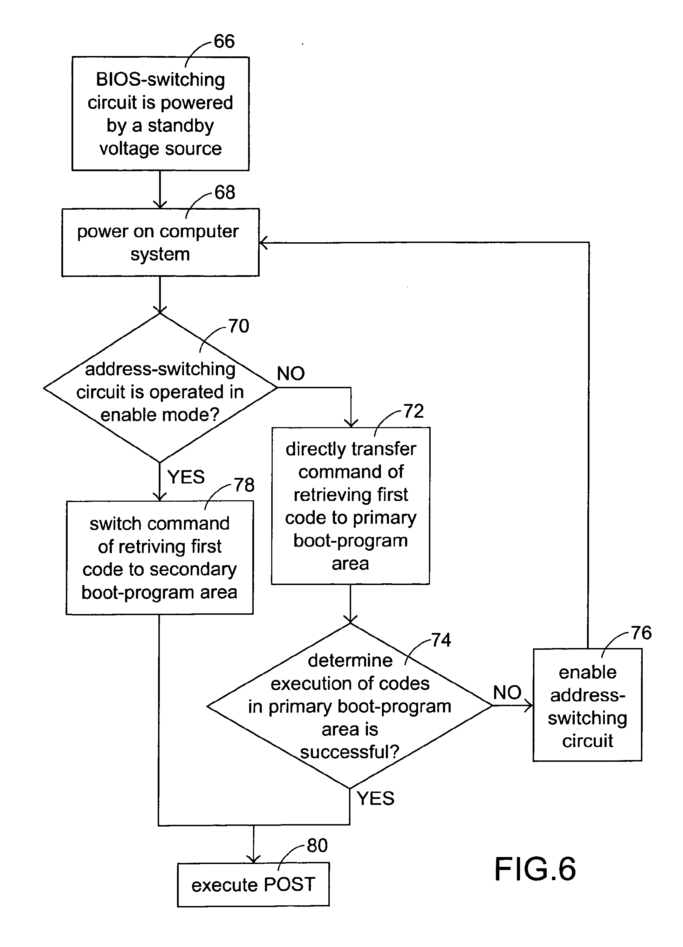

FIG. 6 is a flowchart depicting the booting procedure of the computer system with a dual boot-program area of the present invention. First, the BIOS-switching circuit is powered by a standby voltage source (step 66). A command for retrieving the first code is issued from the CPU when a power button of the computer system is pressed (step 68). The computer system then determines the address-switching circuit is operated in the enable mode or not when the command is reached to the BIOS-switching circuit (step 70).

If the address-switching circuit is operated in the disable mode, the command for retrieving the first code is directly transferred to the primary boot-program area (step 72). Then, the detecting circuit determines the success or failure of the execution of the codes in the primary boot-program area (step 74). If the codes in the primary boot-program area cannot be executed successfully, the detecting circuit controls the address-switching circuit to be operated in the enable mode (step 76); and the boot procedure waits another boot of the computer system (step 68). Alternatively, the boot procedure moves to execute the POST (Power On Self-Test) if the codes in the primary boot-program area can be executed successfully (step 80). When the command, issued from the CPU and for retrieving the first code, is reached to the BIOS-switching circuit operated in the enable mode (step 70), the command is switched to the secondary boot-program area (step 78) for executing codes stored in the secondary boot-program area. The boot procedure then moves to execute the POST (Power On Self-Test) (step 80) after the execution of the codes in the secondary boot-program area is complete.

One advantage of the computer system of the present invention is that the address CS:IP of the command register in the CPU is always set to E000:FFF0h no matter the boot of the computer is through the primary boot-program area or the secondary boot-program area, it follows the huge re-designing work of the CPU, the Chipset, and the BIOS ROM is not needed in the computer system with a dual boot-program area of the present invention.

Moreover, the boot-program area may be damaged when a user upgrades the BIOS ROM in a conventional computer system having only one boot-program area, and the damaged boot-program area may results in the failure of the boot of the computer system. To avoid the situation, users may be forbidden to upgrade the secondary boot-program area after the computer system with a dual boot-program area of the present invention is released to market. It guarantees at least users can successfully boot the computer system of the present invention through the secondary boot-program area when the first boot-program area is damaged.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realising the invention in diverse forms thereof.

## Claims

1. A computer system with a dual boot-program area, **characterized in that** the computer system comprises:
a processing unit (46);
a BIOS ROM (58) having a primary boot-program area (40; 60), a secondary boot-program area (42; 62), and a BIOS main-code area (44; 64), wherein a first code is both stored at a first address of the primary boot-program area (40; 60) and a second address of the secondary boot-program area (42; 62); and
a BIOS-switching circuit (52), connected to the BIOS ROM (58), further comprising a detecting circuit (54) and an address-switching circuit (56), wherein the detecting circuit (54) can control the address-switching circuit (56) to be operated between an enable mode and a disable mode;
wherein a command, issued from the processing unit (46) and for retrieving the first code, is sent to the first address of the primary boot-program area (40; 60) after a power button of the computer system is pressed if the address-switching circuit (56) is operated in the disable mode; or, the command is sent to the second address of the secondary boot-program area (42; 62) if the address-switching circuit (56) is operated in the enable mode.

2. The computer system with a dual boot-program area according to claim 1, **characterized in that** the computer system further comprises a north-bridge chipset (48) and a south-bridge chipset (50), which are sequentially connected between the processing unit (46) and the BIOS-switching circuit (52).

3. The computer system with a dual boot-program area according to claim 1, **characterized in that** the first address is E000:FFF0h and the second address is E000:FFF0h.

4. The computer system with a dual boot-program area according to claim 1, **characterized in that** the processing unit (46) executes a Power-On-Self-Test stored in the BIOS main-code area (44; 64) after either the execution of the codes stored in the primary boot-program area (40; 60) or the secondary boot-program area (42; 62) is complete.

5. The computer system with a dual boot-program area according to claim 1, **characterized in that** the detecting circuit (54) controls the address-switching circuit (56) to be operated in the enable mode by if the processing unit (46) fails to retrieve the codes stored in the primary boot-program area (40; 60).

6. The computer system with a dual boot-program area according to claim 1, **characterized in that** an operation voltage applied to the BIOS-switching circuit (52) is from a Super I/O voltage source.

7. A BIOS program executing method for a computer system with a dual boot-program area, wherein the computer system at least comprises a processing unit (46), a BIOS ROM (58), and a BIOS-switching circuit (52) constituted by a detecting circuit (54) and an address-switching circuit (56) operated in one of an enable mode and a disable mode, **characterized in that** the BIOS program executing method comprises steps of:
powering on the BIOS-switching circuit (52) through connecting the computer system to an external power source;
sending a command of retrieving a first code from the processing unit (46) to the BIOS-switching circuit (52) after a power button of the computer system is pressed; and
directly transferring the command from the address-switching circuit (56) to the BIOS ROM (58) if the address-switching circuit (56) is operated in the disable mode; or, converting the address of the command first by the address-switching circuit (56), and then sending the command to the BIOS ROM (58) if the address-switching circuit (56) is operated in the enable mode.

8. The method according to claim 7, **characterized in that** the operation between the enable mode and the disable mode of the address-switching circuit (56) is determined by the detecting circuit (54).

9. The method according to claim 7, **characterized in that** the address-switching circuit (56) is to be operated in the enable mode if the computer system cannot be booted successfully.
